# EUROPEAN PATENT APPLICATION

(11) **EP 3 399 608 A1**
(43) Date of publication of application: **07.11.2018**
(21) Application number: 18460026.0
(22) Date of filing: 30.04.2018
(51) Int. Cl.: H02B 1/18, H02B 1/20

(54) **SYSTEM FOR ATTACHING A FUSE-DISCONNECTOR TO A BUSBAR**

(30) Priority: 06.05.2017 PL 42151517
(71) Applicant: Zenex Sp. z o.o., 63-200 Jarocin (PL)
(72) Inventor: Krawczyk, Zenon, 63-200 Jarocin (PL); Krawczyk, Lukasz, 63-200 Jarocin (PL)
(74) Representative: Gornicki, Pawel

(57) **Abstract**

The subject of the invention is a system for attaching a fuse-switch disconnector to a busbar, especially in a low-voltage switchgear, consisting of a busbar made of three rigid electric conductors of rectangular cross-section (**1**) that have recesses (**2**) and (**2**') at the front and rear wall, parallel to the longitudinal axis of the conductor (**1**). The heads and bases of step bolts (**3**) and (**3'**) are inserted into recesses (**2**) and (**2**'). The bolt (**3**), whose head is inserted in the recess (**2**) in the conductor (**1**) from the front side, connects the fuse-switch disconnector (**4**) with the conductor (**1**), while the bolt (**3**'), whose head is inserted in the recess (**2**') in the rear the wall of the conductor, connects the conductor (**1**) to the busbar (**6**).

## Description

The subject of the invention is a system for attaching a fuse-switch disconnector to a busbar, especially in a low-voltage switchgear.

In known devices used to distribute high-current electric power, often electrical switchgears with fuse-switch disconnectors are used as electrical circuit protection. Such devices are known, inter alia, from the application description EP2905852, or the patent specification DE 102010051642. High current fuse-switch disconnectors are attached directly to rigid electrical conductors in the form of rectangular copper flat bars. These conductors are the main power or distribution feeders in the electrical switchgear. Such method of installing fuse-switch disconnectors in the electrical switchgear is very popular because it is a cheap solution in comparison to circuits protected by compact circuit breakers. The simplest solution is known from European patent specification EP2546856, in which fuse-switch disconnectors are installed in the openings of a rectangular flat bar. In the solution known from European patent specification EP2546856, a standard fuse-switch disconnector is screwed to a nut driven into a hole in a flat bar. The described solutions require the manufacturer of the switchgear to precisely drill holes in the conductor at the fuse-switch disconnector mounting points. It is also not possible to upgrade the switchgear by in increasing the number of fuse-switch disconnectors, due to the lack of fixing holes in other places than those determined during the switchgear construction.

The users of switchgears, especially in the power industry, expect solutions characterized by the ease of replacing a faulty fuse-switch disconnector. Patent specification EP1215785 presents a solution in which special hook clamps are used to facilitate the connection of a fuse switch disconnector to a rectangular flat bar conductor. The application of this solution does not require making holes in a rectangular flat bar duct, and at the same time allows to move the mounted device along the length of the rectangular flat bar conductor. It is especially advantageous if an additional device is to be added between the two previously installed devices. Similar solutions for attaching fuse-switch disconnectors involving hook clamps are also disclosed in descriptions PL67799, EP3016122, EP1251538, and EP1271727. Known from descriptions DE10215500 and EP0594544 are adapters for installing disconnectors or circuit breakers, which are independent, additional components of the base disconnector, which increase its cost. For this reason, the basic disconnectors are still mostly used and attached to a rectangular flat bar conductor. The disadvantage of solutions with hook connections is the possibility of interfering with the busbar feeder. The hook, including horizontal copper flat bar for fuse-switch disconnectors may interfere with the vertical busbar feeder.

Another solution is disclosed in the specification of international claim WO2010124728. Instead of a hook clamp, this solution uses a connector consisting of an advanced bolt with a parallelogram-shaped head and a special nut with hexagon-shaped hole for fixing in a profiled C-shaped conductor. The disadvantage of this solution is the complex shape of the connector and, consequently, the increase in manufacturing costs.

The purpose of the solution according to the invention was to construct a system to attach a fuse-switch disconnector to a busbar, especially in a low-voltage switchgear, without the disadvantages described above.

According to the invention, a system for attaching a fuse-switch disconnector to a busbar, especially in a low-voltage switchgear, consists of a busbar formed by three rigid electric conductors with a rectangular cross-section, fixed in the switchgear frame, fuse-switch disconnectors, fixing bolt which attaches fuse-switch disconnector to the conductor and a bolt that connects the conductor to a feeder. The system to attach the fuse-switch disconnector to a busbar is characterized in that the conductor to which the fuse-switch disconnector is attached, features on the opposite front and rear walls, recesses parallel to the longitudinal axis of the conductor. Each recess matches the shape of the head and base of the step bolt. The bolt head inserted in the recess in the conductor from the front side, connects the conductor to the fuse-switch disconnector. The bolt head inserted in the recess in the rear wall of the conductor connects the conductor to the feeder.

It is preferred that the busbar conductors are made of an aluminium alloy.

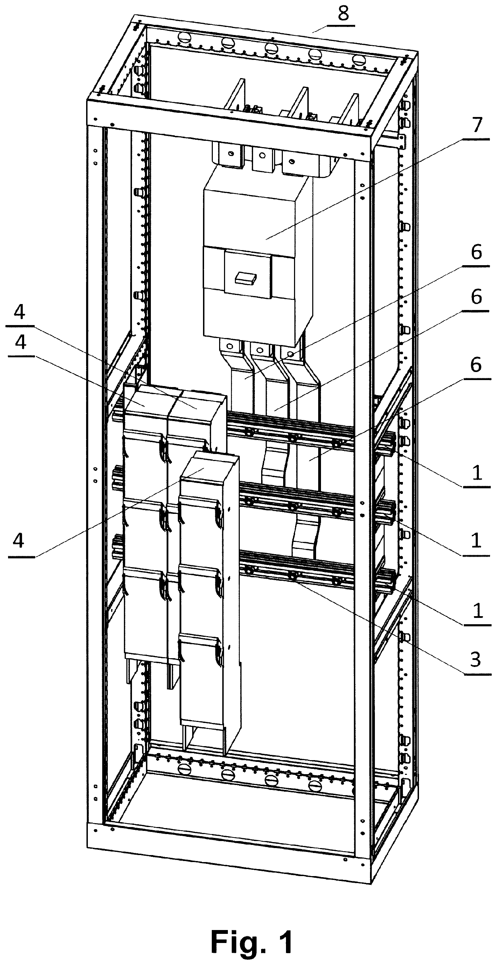

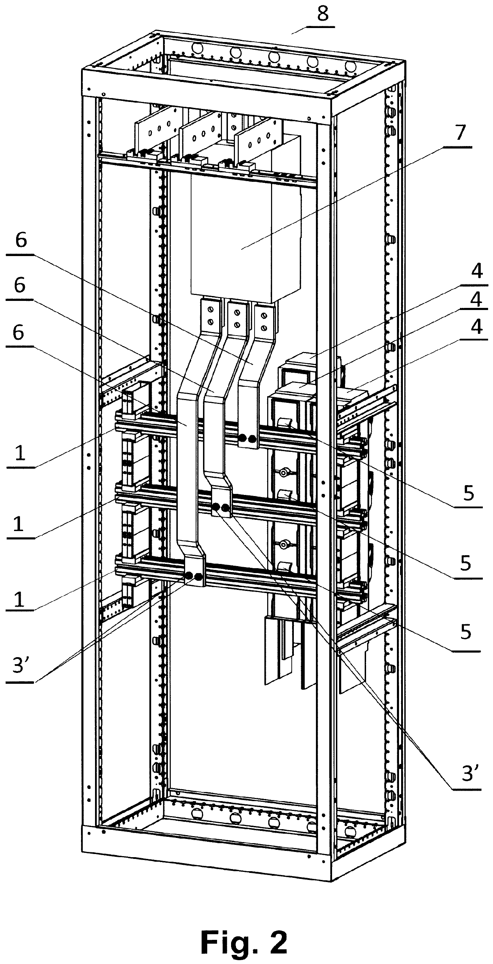

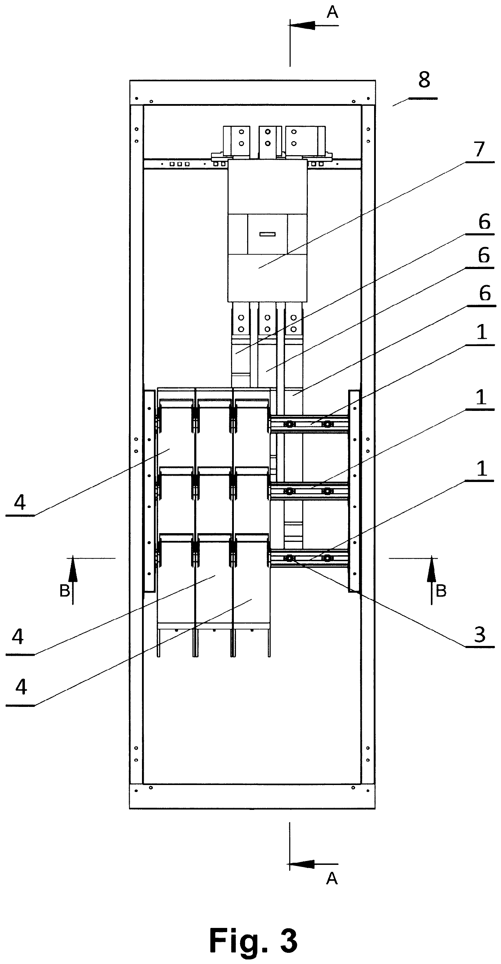

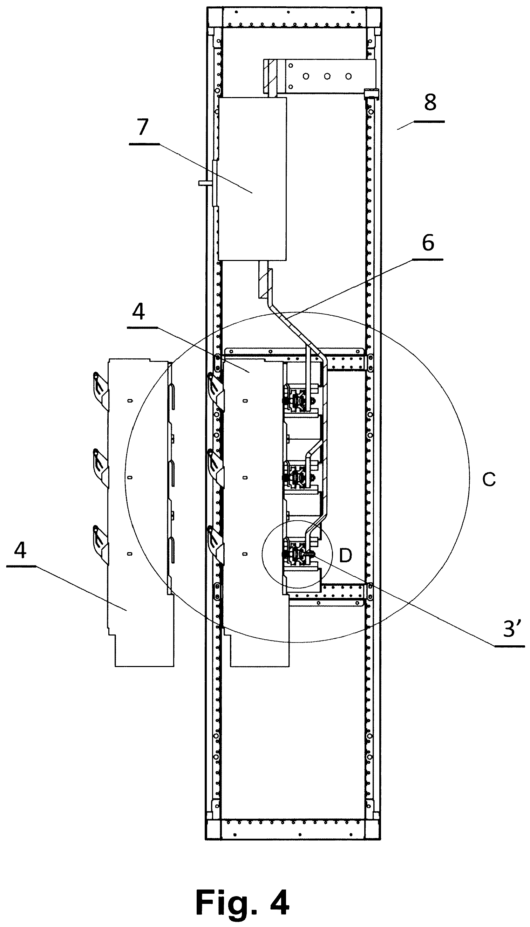

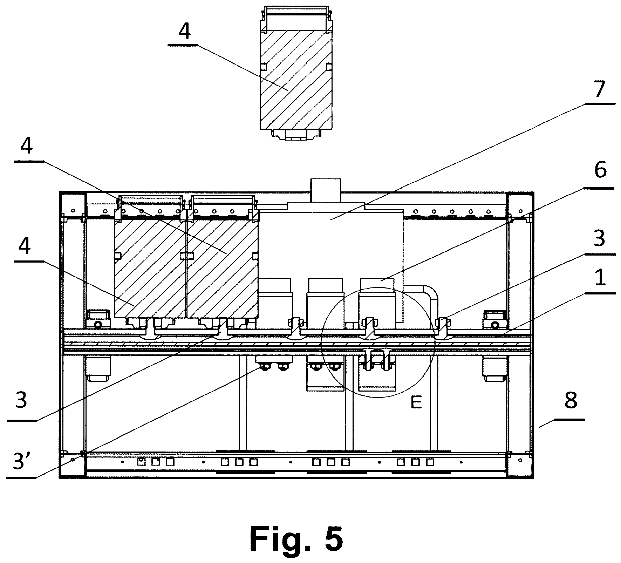

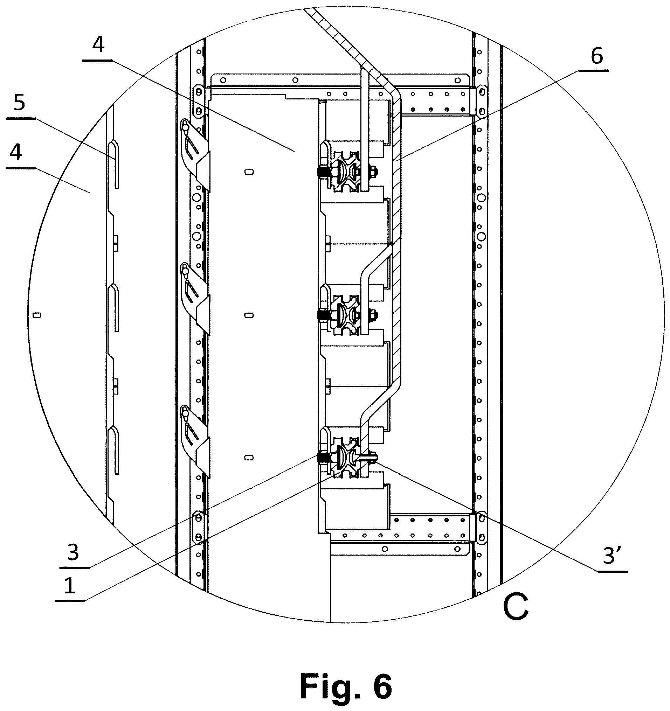

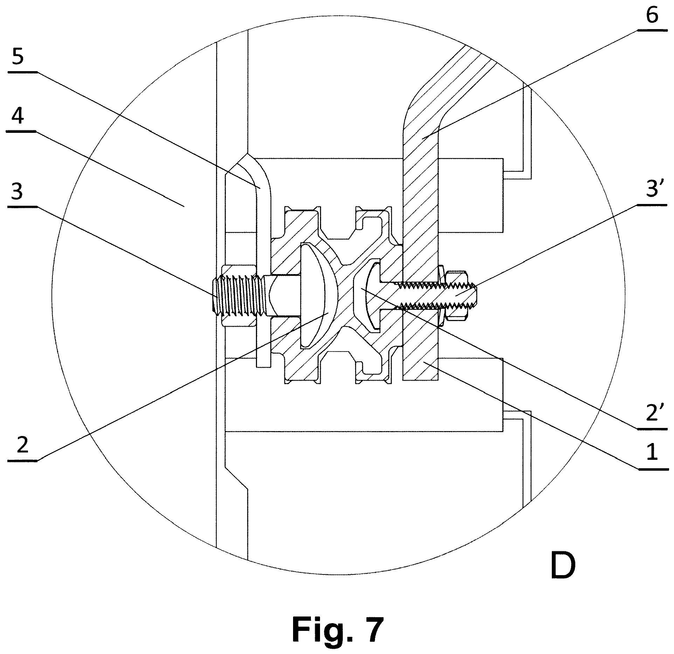

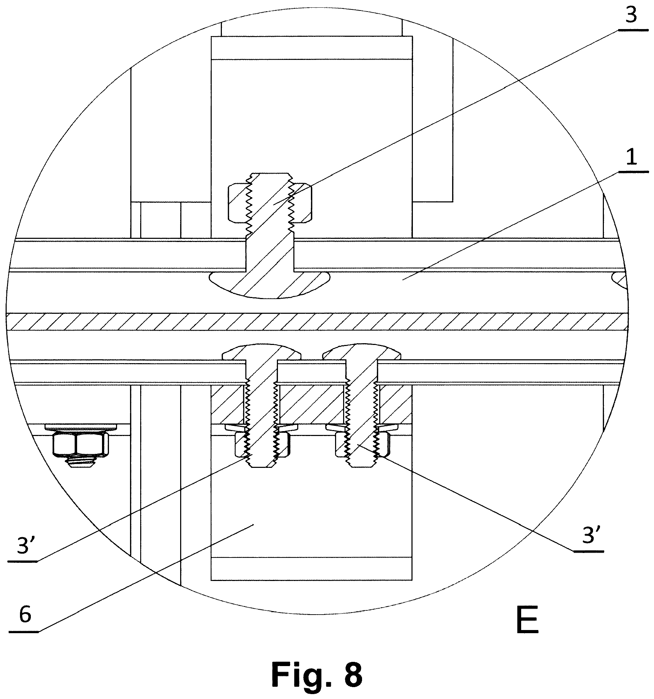

The subject of the invention is explained in more detail in the figure, in which fig. 1 shows an electric switchgear in axonometric view, in a front view, with two fuse-switch disconnectors attached to the busbar and a third "free" fuse-switch disconnector, revealing the place of its attachment to the busbar, fig. 2 shows an axonometric view of the switchgear from the rear, fig. 3 shows the front view of the switchgear, fig. 4 shows a cross-section of the switchgear along the A-A line of fig. 3, together with a third non-installed fuse-switch disconnector shown in fig. 1, fig. 5, shows a cross-section of the switchgear along the B-B line of fig. 3, together with a third non-installed fuse-switch disconnector shown in fig. 1, fig. 6 shows detail C of fig. 4, fig. 7 shows detail D of fig. 4, fig. 8 shows detail E of fig. 5.

The busbar in switchgear **8** consists of three horizontal, rigid electric conductors **1** made of aluminium alloy, installed in the frame of switchgear **8.** The conductor 1 has a rectangular cross-section. On the opposite walls, front and back, along its entire length, it has recesses **2** and **2**' parallel to the longitudinal axis of the conductor **1,** matching the shape of the step bolt heads **3** and **3'.** The bolt **3** fixes the fuse-switch disconnector **4** to the conductor 1, through the connection **5,** mounted on the rear wall of the fuse-switch disconnector **4.** The bolt **3**' connects the conductor **1** to a feeder **6** connecting the conductor **1** to the main circuit breaker **7**. The bolt **3**, with its head inserted in the recess **2** of the conductor **1**, can be moved along the conductor **1** to select any desired position of the fuse-switch disconnector **4** on the conductor **1** and fix its position in the desired location by tightening the bolt nut **3**.

The fuse-switch disconnector **4** can be attached to the conductor **1**, also in the place where the feeder **6** is attached to the opposite wall of the conductor **1**. In the example switchgear shown in the figure, it is possible to install five standard fuse-switch disconnectors.

An advantage of the system to attach fuse-switch disconnector to a busbar according to the invention is the ease of attaching a standard fuse-switch disconnector to a busbar, anywhere on the busbar conductors. Application of the solution according to the invention allows easy and quick dismantling and replacement of a faulty fuse-switch disconnector. The possibility of installing a fuse-switch disconnector in any place of the busbar allows for easy upgrade of the switchgear, as well as the use of a fuse-switch disconnector of a non-standard width.

## Claims

1. A system for attaching a fuse-switch disconnector to a busbar, especially in a low-voltage switchgear, consisting of a busbar made of three rigid electric conductors of rectangular cross-section, which are installed in the switchgear frame, fuse-switch disconnectors, fixing bolt which attaches fuse-switch disconnector to the conductor and bolt that connects the conductor to a feeder, **characterized by** the fact that the conductor (**1**) to which the fuse-switch disconnector (**4**) is attached features on the opposite walls, front and rear, recesses (**2**) and (**2'**) parallel to the longitudinal axis of the conductor (**1**), and each recess (**2**) and (**2'**) matches the shape of the head and base of the inserted step bolt (**3**) and (**3'**), while the bolt (**3**), with the head inserted in the recess (**2**) in the conductor (**1**) from the front, connects the fuse-switch disconnector (**4**) to the conductor (**1**), while the bolt (**3'**), with its head inserted in the recess (**2'**) in the rear wall of the conductor, connects the conductor (**1**) to the busbar (**6**).

2. A system for attaching a fuse-switch disconnector to a busbar, especially in a low-voltage switchgear, according to claim 1, **characterized in that** the conductor (**1**) of the busbar is made of an aluminium alloy.
